# FASCICULE DE BREVET EUROPEEN

(11) **EP 0 887 538 B1**
(45) Date de publication et mention de la délivrance du brevet: **27.08.2003**
(21) Numéro de dépôt: 98401559.4
(22) Date de dépôt: 25.06.1998
(51) Int. Cl.: F02K 1/38, F02K 1/46

(54) **Ejecteur et mélangeur déployable pour turbomachines**
Ausfahrbarer Ejektor-Mischer für eine Turbomaschine
Deployable ejector-mixer for turbomachines

(30) Priorité: 26.06.1997 FR 9707987
(43) Date de publication de la demande: 30.12.1998
(73) Titulaire: SNECMA MOTEURS, 75015 Paris (FR)
(72) Inventeur: Guyonnet, Xavier Jean Michel André, 77310 Saint Fargeau Ponthierry (FR); Wurniesky, Pascal Claude, 77176 Savigny le Temple (FR)
(74) Mandataire: Berrou, Paul

(56) Documents cités:
- WO-A-93/22552
- FR-A- 2 126 922
- FR-A- 2 661 715
- GB-A- 874 496
- US-A- 2 997 845
- US-A- 3 637 041
- US-A- 5 261 229

## Description

L'invention a pour objet un arrière-corps éjecteur mélangeur d'une turbomachine devant équiper un avion civil supersonique.

Le niveau de bruit émis par les gaz s'échappant de la tuyère d'un turboréacteur est d'autant plus important que la vitesse d'éjection de ces gaz est élevée. Ce bruit, dit "bruit de jet", est notamment important dans les turboréacteurs dits monoflux.

La nécessité de réduire les niveaux de bruit des avions autour des aéroports ainsi que pendant leurs évolutions à basses et moyennes altitudes exige d'équiper les turbomachines de dispositifs d'atténuation de bruit des gaz à éjection.

Une technique efficace pour diminuer le bruit de jet consiste à mélanger le flux primaire de gaz chauds émis à grande vitesse par le générateur à gaz de la turbomachine avec un air froid de faible vitesse prélevé dans une veine d'écoulement secondaire extérieure à la veine d'écoulement primaire, afin d'obtenir à la sortie de la tuyère un mélange relativement homogène et de vitesse intermédiaire.

On connaît divers dispositifs fixes susceptibles de réaliser ce mélange. Ces dispositifs sont dits "à tuyaux d'orgue", "à marguerites" ou à lobes. Leur présence permanente dans la veine d'écoulement des gaz chauds issus du générateur à gaz est pénalisante sur le plan des performances, car elle entraîne une surconsommation dans certains régimes de vol.

Dans les avions supersoniques, la tuyère d'éjection a une configuration variable, adaptable selon les conditions de vol et de la vitesse de l'avion. La diminution du bruit de réacteur est surtout nécessaire durant les phases de décollage et de montée de l'avion. Durant les autres phases de vol que sont la croisière en régime supersonique, la descente, l'approche et l'atterrissage, on peut fonctionner sans dispositif d'atténuation du bruit, car l'altitude est très élevée dans la phase de croisière supersonique, et les régimes du moteur sont réduits dans les autres phases de vol.

Il faut donc, pendant les phases de décollage et de montée de l'avion, disposer d'alimentations momentanées en air froid qui viennent se mélanger aux gaz chauds issus du générateur à gaz, afin d'abaisser la température de ces gaz chauds et par suite la vitesse des gaz éjectés par la tuyère et le bruit de réacteur.

US 5 154 052 et US 5 291 672 dévoilent des arrière-corps éjecteurs mélangeurs pour avion supersonique qui comportent une nacelle de section rectangulaire dont les deux parois horizontales sont équipées de volets convergents-divergents à géométrie variable, et des dispositifs mélangeurs pivotables présentant une pluralité de goulottes espacées l'une de l'autre et susceptibles de prendre une position déployée dans laquelle elles canalisent de l'air froid, prélevé à l'extérieur, dans la veine d'écoulement des gaz chauds et une position escamotée dans laquelle elles sont inopérantes. Ces goulottes comportent chacune deux parois latérales espacées de forme triangulaire reliées sur l'un de leurs bords par une paroi transversale formant un fond de goulotte et dirigée radialement vers l'intérieur de la veine et vers l'aval dans la position déployée des goulottes. Dans la position escamotée, ces goulottes logent dans l'épaisseur de la nacelle et les fonds de goulotte obturent des lumières prévues en correspondance avec les goulottes dans les parois internes de la nacelle. Cette disposition nécessite d'augmenter l'épaisseur des parois de la nacelle ce qui entraîne un accroissement de traînée aérodynamique qui est néfaste et induit une surconsommation de carburant.

Partant de cet état de la technique, l'invention s'est donnée pour but de proposer un arrière-corps éjecteur mélangeur de turbomachine pour avion supersonique, dans lequel les dispositifs mélangeurs pivotables restent présents dans la veine d'écoulement des gaz de la turbomachine dans la position escamotée, sans toutefois générer de pertes inacceptables.

L'invention concerne donc un arrière-corps éjecteur mélangeur de turbomachine pour avion supersonique qui comporte une nacelle de section rectangulaire délimitant la veine d'écoulement des gaz issus du générateur à gaz, ladite nacelle étant équipée d'une tuyère d'éjection à géométrie variable pour l'éjection des gaz et de deux dispositifs mélangeurs pivotables présentant chacun une pluralité de goulottes espacées l'une de l'autre et susceptibles de prendre une position déployée dans laquelle elles canalisent de l'air froid, prélevé à l'extérieur, dans la veine d'écoulement et une position escamotée dans laquelle elles sont inopérantes, chaque goulotte comportant deux parois latérales espacées de forme triangulaire et une paroi transversale formant "fond de goulotte" et dirigée radialement vers l'intérieur et vers l'aval dans la position déployée et étant pivotable autour d'un bord d'une lumière prévue en correspondance dans la paroi interne de la nacelle.

Selon l'invention, cet arrière-corps est caractérisé par le fait que dans la position déployée, les parois latérales des goulottes restent dans la veine d'écoulement, et les parois transversales formant fonds de goulotte sont parallèles à l'axe de la nacelle et par le fait qu'il est prévu des moyens pour obturer les lumières correspondantes dans la position escamotée des goulottes.

De manière avantageuse, la tuyère d'éjection comporte des volets mobiles à géométrie variable dans les parois horizontales de la nacelle, et les deux dispositifs mélangeurs sont montés sur les flancs de la nacelle à l'amont de la tuyère d'éjection.

Selon une première variante de réalisation, les goulottes d'un dispositif mélangeur sont monoblocs et montées pivotantes autour d'un axe éloigné des parois transversales formant fonds de goulotte et situé sur le bord aval des lumières correspondantes. Dans ce cas, les moyens pour obturer les lumières correspondant aux goulottes d'un dispositif mélangeur comportent une porte montée pivotante autour de l'axe desdites goulottes et située à l'extérieur de la veine d'écoulement.

Selon une deuxième variante de réalisation, les parois latérales des goulottes sont fixées sur la paroi interne de la nacelle, de part et d'autre des lumières, et les parois formant fonds de goulotte sont constituées par des volets articulés sur les bords amont des lumières, lesdits volets étant susceptibles d'obturer les lumières dans la position escamotée des goulottes.

Grâce à cette disposition les dispositifs mélangeurs restent présents dans la veine d'écoulement des gaz chauds de la turbomachine. Dans la position escamotée des goulottes, les parois constitutives de ces dernières sont parallèles à l'axe de la nacelle et situées dans la veine de l'écoulement de manière à ne pas trop perturber l'écoulement des gaz éjectés.

D'autres avantages et caractéristiques de l'invention ressortiront à la lecture de la description suivante faite à titre d'exemple et en référence au dessin annexé dans lequel :
la figure 1 montre en perspective et en éclaté un arrière-corps d'une turbomachine en régime de décollage et de montée selon un première variante de réalisation de l'invention ;
la figure 2 montre en perspective et en éclaté l'arrière-corps de la figure 1 en régime supersonique ;
la figure 3 montre en perspective et en éclaté un arrière-corps de turbomachine en régime de décollage et de montée selon une deuxième variante de réalisation de l'invention ;
la figure 4 montre en perspective et en éclaté l'arrière-corps de la figure 3 en régime supersonique.

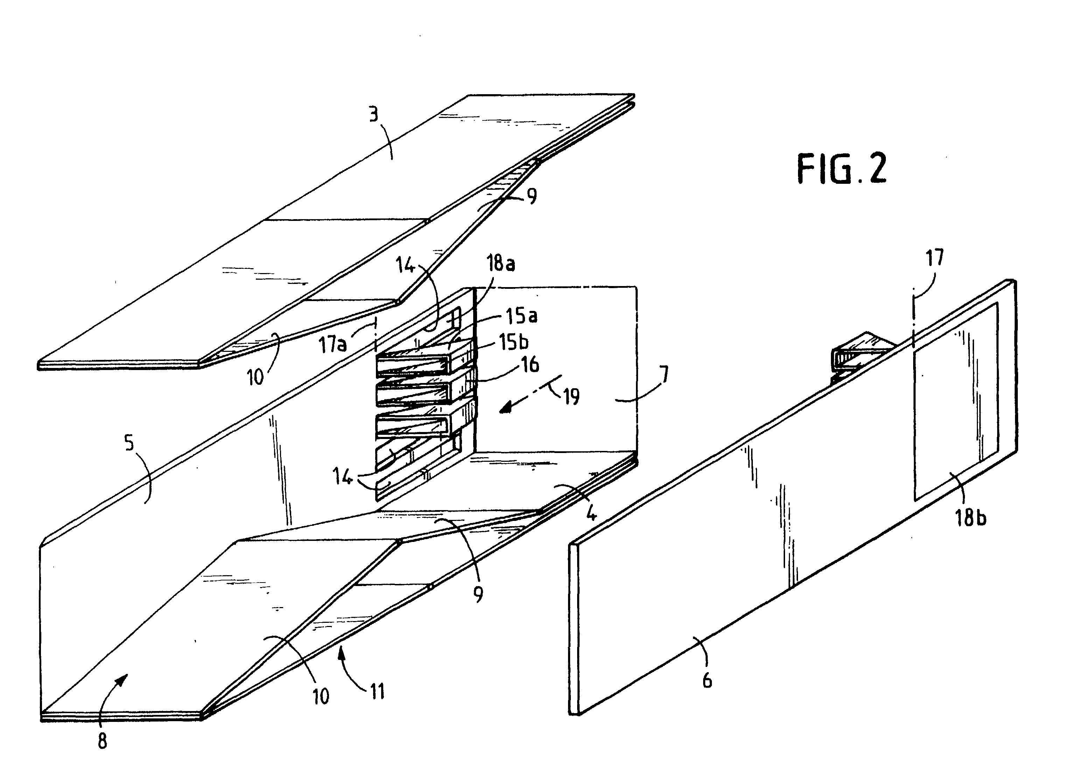

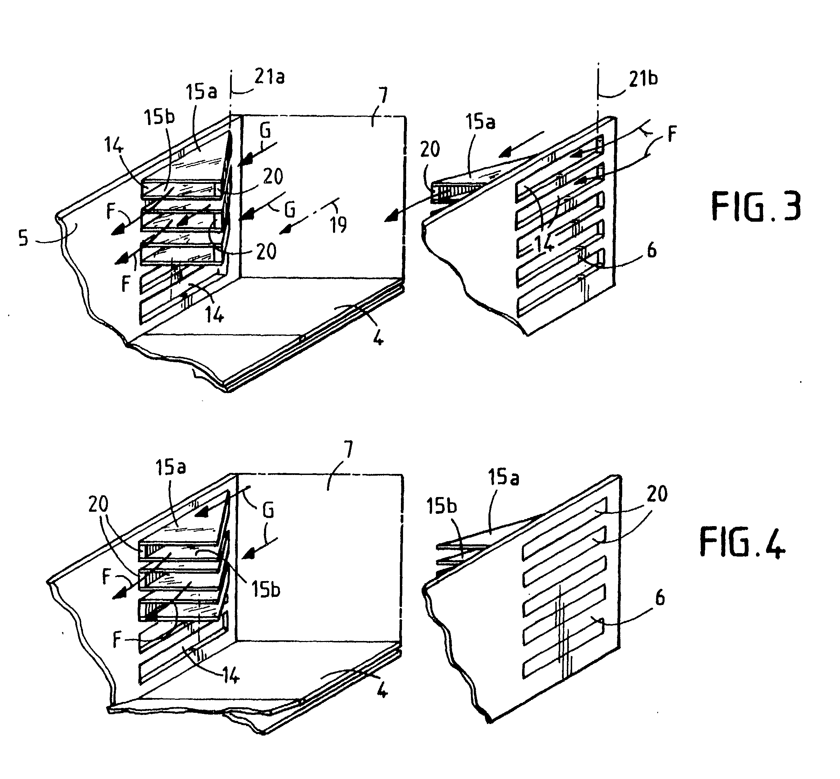

Le dessin montre un arrière-corps d'une turbomachine pour avion supersonique comportant une nacelle 2 de section rectangulaire délimitée intérieurement par une paroi supérieure 3, une paroi inférieure 4 et deux flancs latéraux 5 et 6. La référence 7 représente l'orifice d'entrée du flux de gaz chauds issus du générateur à gaz de la turbomachine et la référence 8 la sortie de la tuyère 11. Les parois supérieure 3 et inférieure 4 sont équipées de volets mobiles 9 et 10, qui permettent de donner à la tuyère d'éjection 11 une configuration à géométrie variable, notamment une configuration convergente-divergente en régime supersonique (figures 2 et 4).

Les flancs latéraux 5 et 6 sont équipés chacun en aval de l'orifice d'entrée 7 et en amont de la tuyère 11, d'un dispositif mélangeur 12a, 12b qui, dans les phases de décollage ou de montée de l'avion, permet d'introduire un flux d'air froid F prélevé à l'extérieur de la nacelle 2 dans la veine d'écoulement de gaze chauds G issus du générateur à gaz.

Chaque dispositif mélangeur 12a, 12b comporte une pluralité de goulottes 13 espacées l'une de l'autre et disposées chacune en regard d'une lumière 14 oblongue ménagée dans le flanc latéral correspondant de la nacelle 2. Les flancs latéraux 5 et 6 comportent ainsi une pluralité de lumières espacées verticalement.

Chaque goulotte 13 comporte deux parois latérales 15a et 15b de forme globalement triangulaire et espacées et une paroi transversale 16 formant le fond de goulotte.

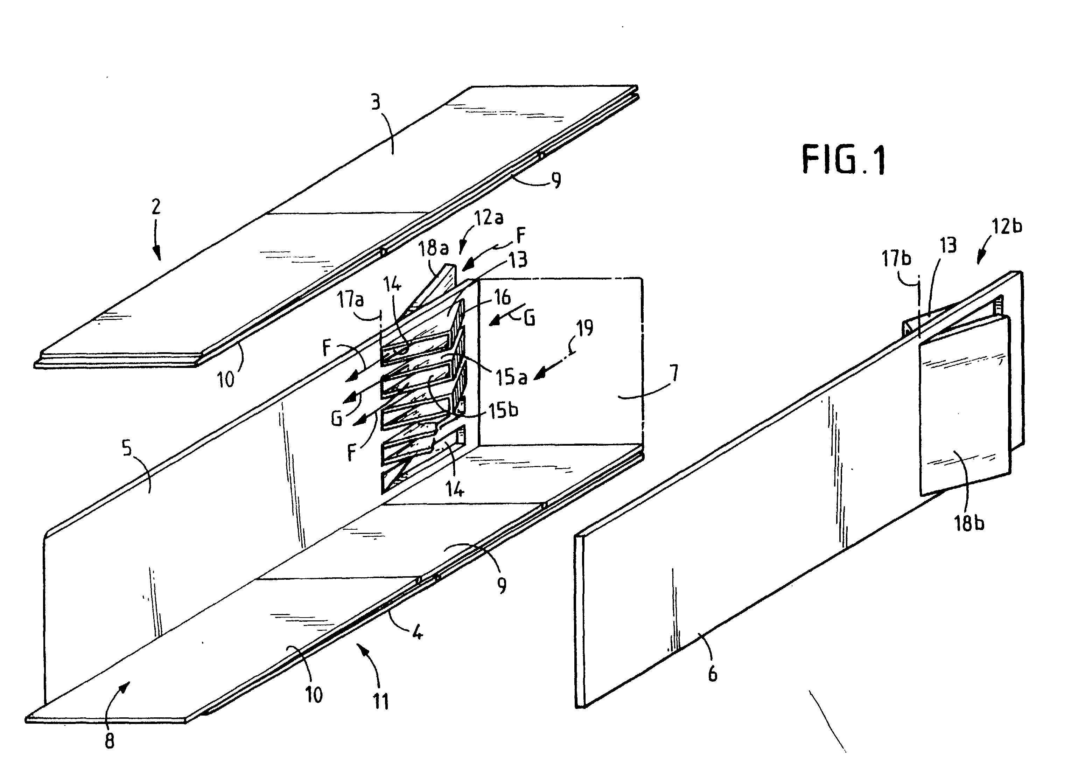

Selon un premier mode de réalisation représenté sur les figures 1 et 2, chaque goulotte 13 est monobloc et la paroi transversale 16 relie les bords des parois latérales 14 et 15 éloignés de l'axe d'articulation vertical 17a, 17b de la goulotte 13 sur le flanc correspondant 5 ou 6, cet axe d'articulation 17a, 17b étant prévu au voisinage du bord aval de la lumière 14. L'air prélevé est capté à l'extérieur de la veine d'écoulement par deux portes 18a, 18b articulées respectivement sur les axes 17a, 17b. Ces portes 18a, 18b peuvent être solidaires des goulottes 13, et leur déplacement en rotation par des organes de commande entraîne le pivotement simultané des goulottes 13 autour de leurs axes d'articulation 17a, 17b.

Les goulottes 13 et les portes 18a, 18b peuvent prendre deux positions extrêmes en fonction des conditions de vol. Dans la position déployée, montrée sur la figure 1, les portes 18a, 18b sont écartées des flancs 5 et 6 et dirigées radialement vers l'extérieur et vers l'amont de la turbomachine, tandis que les goulottes 13 sont rabattues contre les flancs 5 et 6, leurs parois transversales 16 formant fonds de goulotte étant dirigées depuis le bord amont des lumières 14 radialement vers l'intérieur de la veine d'écoulement et vers la tuyère 11. Cette position déployée est utilisée durant les phases de décollage et de montée de l'avion. Des filets d'air froid sont ainsi intercalés entre les filets d'air chaud qui passent par les espaces séparant les goulottes 13 en amont de la tuyère 11. Ces filets d'air froid se mélangent au flux de gaz chauds G issu du générateur à gaz de la turbomachine, afin d'en diminuer la température et par suite le niveau de bruit de réacteur émis par l'éjecteur des gaz.

La figure 2 montrent la position des goulottes 13 et des portes 18a, 18b dans la deuxième position, dite position escamotée, utilisée lors des autres phases de vol. Dans cette position escamotée, les portes 18a, 18b sont rabattues contre les parois externes des flancs latéraux 5 et 6 et obturent les lumières 14, par rotation autour des axes 17a, 17b. Au cours du pivotement des portes 18a, 18b, les goulottes 13 pivotent également autour des axes 17a et 17b. Dans cette position escamotée (voir figure 2), les parois transversales 16 formant fonds de goulotte sont disposées parallèlement à l'axe médian 19 de la nacelle 2, c'est-à-dire parallèlement aux parois internes des flancs latéraux 5 et 6. Les parois latérales 15a, 15b restent dans la veine d'écoulement et sont dans des plans parallèles à l'axe médian 19. Les parois 15a et 15b et la paroi transversale 16 sont suffisamment minces et profilées pour minimiser les pertes dans l'écoulement des gaz chauds.

Dans le premier mode de réalisation décrit ci-dessus, les portes 18a et 18b sont pivotantes autour des axes de pivotement 17a, 17b des goulottes 13. Il est également possible de les concevoir coulissantes contre ou dans les flancs latéraux 5, 6 de la nacelle 2. Dans ce cas, les dispositifs mélangeurs 12a, 12b seraient dotés d'organes de commande propres, afin de tourner autour des axes 17a, 17b.

Selon un deuxième mode de réalisation de l'invention représenté sur les figures 3 et 4, les parois latérales 15a, 15b de chaque goulotte 13 sont fixées sur la paroi interne des flancs 5 ou 6 le long des bords longitudinaux des lumières 14. Les portes 18a, 18b et les parois transversales 16 du premier mode de réalisation sont ici avantageusement remplacées par des volets 20 articulés sur les bords amont des lumières 14, afin qu'ils puissent pivoter autour des axes verticaux 21a, 21b entre deux positions extrêmes; une position déployée dans laquelle les volets 20 sont dirigés radialement vers l'intérieur et vers l'aval et se trouvent le long des bords internes des parois latérales 15a, 15b et une position escamotée dans laquelle les volets 20 obturent le lumières 14. Dans la position déployée (voir figure 3), les volets 20 sont placés dans le flux de gaz chauds, ce qui entraîne l'ouverture des lumières 14 dans les flancs 5, 6 de la nacelle 2. De l'air froid F peut pénétrer et circuler dans les goulottes 13. Les gaz chauds G circulent dans les espaces inter goulottes et se mélangent avec l'air froid en aval des goulottes 13, ce qui ralentit l'écoulement dans la tuyère 11.

Lorsque l'avion est en régime supersonique, l'action des dispositifs mélangeurs 12a, 12b n'est plus requise, et les volets 20 s'escamotent en tournant autour des axes verticaux 21a, 21b et en fin de course viennent obturer les lumières 14 et se logent dans l'épaisseur des flancs 5, 6 de la nacelle 2. Il ne reste dans le flux de gaz chauds G que les parois supérieure 15a et inférieure 15b des goulottes 13. Cette disposition n'est pas contraignante pour les qualités de l'écoulement de gaz chauds.

Les dispositions de l'invention permettent de réduire au décollage et en montée le niveau sonore des moteurs et de réduire le plus possible les dimensions transversales de la nacelle 2.

## Revendications

1. Arrière-corps éjecteur mélangeur de turbomachine pour avion supersonique comportant une nacelle (2) de section rectangulaire délimitant la veine d'écoulement des gaz G issus du générateur à gaz, ladite nacelle (2) étant équipée d'une tuyère d'éjection (11) à géométrie variable pour l'éjection des gaz et de deux dispositifs mélangeurs (12a, 12b) pivotables présentant chacun une pluralité de goulottes (13) espacées l'une de l'autre et susceptibles de prendre une position déployée dans laquelle elles canalisent de l'air froid F, prélevé à l'extérieur, dans la veine d'écoulement et une position escamotée dans laquelle elles sont inopérantes, chaque goulotte (13) comportant deux parois latérales (15a, 15b) espacées de forme triangulaire et une paroi transversale (16) formant "fond de goulotte" et dirigée radialement vers l'intérieur et vers l'aval dans la position déployée et étant pivotable autour d'un bord d'une lumière (14) prévue en correspondance dans la paroi interne de la nacelle (2), les parois latérales (15a, 15b) des goulottes (13) dans la position escamotée, restant dans la veine d'écoulement, et les parois transversales (16) formant fonds de goulotte sont parallèles à l'axe (19) de la nacelle (2) et il est prévu des moyens pour obturer les lumières (14) correspondantes dans la position escamotée des goulottes (13), la tuyère d'éjection (11) comportant des volets mobiles (9, 10) à géométrie variable dans les parois (3, 4) horizontales de la nacelle (2), les deux dispositifs mélangeurs (12a, 12b) étant montés sur les flancs (5, 6) de la nacelle (2) à l'amont de la tuyère d'éjection (11), **caractérisé par le fait que** les goulottes (13) d'un dispositif mélangeur (12a, 12b) sont monoblocs et montées pivotantes autour d'un axe (17a, 17b) éloigné des parois transversales (16) formant fonds de goulotte et situé sur le bord aval des lumières (14) correspondantes.

2. Arrière-corps selon la revendication 1, **caractérisé par le fait que** les moyens pour obturer les lumières (14) correspondant aux goulottes (13) d'un dispositif mélangeur (12a, 12b) comportent une porte (18a, 18b) montée pivotante autour de l'axe (17a, 17b) desdites goulottes (13) et située à l'extérieur de la veine d'écoulement.

3. Arrière-corps selon l'une quelconque des revendication 1 ou 2, **caractérisé par le fait que** les parois latérales (15a, 15b) des goulottes (13) sont fixées sur la paroi interne de la nacelle (2), de part et d'autre des lumières (14), et **par le fait que** les parois (16) formant fonds de goulotte sont constituées par des volets (20) articulés sur les bords amont des lumières (14), lesdits volets (20) étant susceptibles d'obturer les lumières dans la position escamotée des goulottes.

## Patentansprüche

1. Ejektor-Mischer-Heckteil einer Turbomaschine für Überschallflugzeuge mit einer Gondel (2) mit rechteckigem Querschnitt, der den Strömungsgang der von dem Gasgenerator ausgegebenen Gase G begrenzt, wobei diese Gondel (2) mit einer Schubdüse (11) mit variabler Geometrie für den Auswurf der Gase sowie mit zwei Mischvorrichtungen (12a, 12b) ausgestattet ist, die jeweils eine Mehrzahl von Rinnen (13) besitzen, die im Abstand voneinander angeordnet sind und eine ausgefahrene Stellung einnehmen können, in der sie außen entnommene kalte Luft F in dem Strömungsgang kanalisieren, und eine eingefahrene Stellung, in der sie unwirksam sind, wobei jede Rinne (13) zwei im Abstand angeordnete, dreieckförmige Seitenwände (15a, 15b) und eine den "Rinnenboden" bildende Querwand (16) aufweist, die in ausgefahrener Stellung nach innen und zur stromabwärtigen Seite gerichtet ist und um einen Rand einer Öffnung (14) verschwenkbar ist, die an entsprechender Position in der Innenwand der Gondel (2) vorgesehen ist, wobei die Seitenwände (15a, 1b) der Rinnen (13) in der eingefahrenen Stellung in dem Strömungsgang verbleiben und die die Rinnenböden bildenden Querwände (16) parallel zur Achse (19) der Gondel (2) verlaufen und wobei Mittel zum Verschließen der entsprechenden Öffnungen (14) in der eingefahrenen Stellung der Rinnen (13) vorgesehen sind, wobei die Schubdüse (11) in den horizontalen Wänden (3, 4) der Gondel (2) bewegliche Klappen (9, 10) mit variabler Geometrie umfaßt, wobei ferner stromaufwärts der Schubdüse (11) zwei Mischvorrichtungen (12a, 12b) an den Flanken (5, 6) der Gondel (2) montiert sind,
**dadurch gekennzeichnet,**
**daß** die Rinnen (13) einer Mischvorrichtung (12a, 12b) Monoblöcke sind und um eine Achse (17a, 17b) verschwenkbar sind, die von den die Rinnenböden bildenden Querwänden (16) Abstand hat und an dem stromabwärtigen Rand der betreffenden Öffnungen liegt.

2. Heckteil nach Anspruch 1, **dadurch gekennzeichnet, daß** die Mittel zum Verschließen der den Rinnen (13) einer Mischvorrichtung (12a, 12b) entsprechenden Öffnungen (14) eine Klappe (18a, 18b) umfassen, die um die Achse (17a, 17b) der Rinnen (13) schwenkbar montiert und außerhalb des Strömungsgangs angeordnet ist.

3. Heckteil nach einem der Ansprüche 1 oder 2, **dadurch gekennzeichnet, daß** die Seitenwände (15a, 15b) der Rinnen (13) zu beiden Seiten der Öffnungen (14) an der Innenwand der Gondel (2) befestigt sind und daß die die Rinnenböden bildenden Wände (16) von Klappen (20) gebildet sind, die an den stromaufwärtigen Rändern der Öffnungen (14) angelenkt sind, wobei diese Klappen (20) die Öffnungen in der eingefahrenen Stellung der Rinnen verschließen können.

## Claims

1. Turbomachine mixing ejecting afterbody for a supersonic aeroplane comprising a nacelle (2) of rectangular cross section delimiting the duct through which the gases G from the gas generator flow, the said nacelle (2) being equipped with a variable-geometry jetpipe (11) for ejecting the gases and with two pivotable mixing devices (12a, 12b) each having a number of troughs (13) spaced apart and able to adopt a deployed position in which they duct cold air F, taken from the outside, into the flow duct and a retracted position in which they are inoperative, each trough (13) comprising two spaced-apart side walls (15a, 15b) of triangular shape and a transverse wall (16) forming the "trough bottom" and directed radially inwards and in the downstream direction in the deployed position, and being pivotable about an edge of a slot (14) provided accordingly in the internal wall of the nacelle (2), the side walls (15a, 15b) of the troughs (13) in the retracted position remaining in the flow duct, and the transverse walls (16) forming the trough bottoms are parallel to the axis (19) of the nacelle (2), and means are provided for blocking off the corresponding slots (14) when the troughs (13) are in the retracted position, the jetpipe (11) comprising variable-geometry moving flaps (9, 10) in the horizontal walls (3, 4) of the nacelle (2), the two mixing devices (12a, 12b) being mounted on the flanks (5, 6) of the nacelle (2) upstream of the jetpipe (11), **characterized in that** the troughs (13) of a mixing device (12a, 12b) are one-piece and mounted to pivot about an axis (17a, 17b) distant from the transverse walls (16) forming the trough bottoms and situated on the downstream edge of the corresponding slots (14).

2. Afterbody according to Claim 1, **characterized in that** the means for blocking off the slots (14) corresponding to the troughs (13) of a mixing device (12a, 12b) comprise a door (18a, 18b) mounted to pivot about the axis (17a, 17b) of the said troughs (13) and situated outside the flow duct.

3. Afterbody according to either one of Claims 1 and 2, **characterized in that** the side walls (15a, 15b) of the troughs (13) are fixed to the internal wall of the nacelle (2) on each side of the slots (14), and **in that** the walls (16) forming the trough bottoms consist of flaps (20) articulated to the upstream edges of the slots (14), the said flaps (20) being able to block off the slots when the troughs are in the retracted position.
